# EUROPEAN PATENT SPECIFICATION

(11) **EP 0 727 389 B1**
(45) Date of publication and mention of the grant of the patent: **07.10.1998**
(21) Application number: 96301019.4
(22) Date of filing: 14.02.1996
(51) Int. Cl.: C01B 33/02, C01B 33/107, C07F 7/16

(54) **Method of recovering particulate silicon from a by-product stream**
Verfahren zur Rückgewinnung teilchenförmigen Siliciums aus einem Nebenproduktstrom
Procédé de récupération de silicium particulaire d'un courant sous-produit

(30) Priority: 15.02.1995 US 388915
(43) Date of publication of application: 21.08.1996
(73) Proprietor: DOW CORNING CORPORATION, Midland Michigan 48686-0994 (US)
(72) Inventor: Herman, John E., Midland, Michigan (US)
(74) Representative: Hall, Marina

(56) References cited:
- FR-A- 1 181 077
- FR-A- 2 398 020
- US-A- 5 118 486

## Description

The present invention relates to a method of recovering particulate silicon which is essentially free of silicon-containing compounds from a by-product stream containing metal salts and high-boiling silicon-containing compounds having a boiling point higher than the sublimation temperature of the metal salts. Our method comprises, first, separating particulate silicon and other solids from the by-product stream by a method such as filtration. The particulates are then washed with a solvent having a boiling point lower than the sublimation temperature of the metal salt, thereby separating residual high-boiling, silicon-containing compounds from the particulate silicon and other solids. Thereafter, the particulate silicon and other solids are recovered in a dried form, essentially free of silicon-containing compounds, by spray-drying at a temperature below the sublimation temperature of the metal salt.

Commercial processes for producing chlorosilanes typically use fluidized-bed reactors in which particulate silicon is reacted with methyl chloride to form organochlorosilanes, or with hydrogen chloride to form chlorosilanes. During the operation of this process, a portion of the particulate silicon, typically referred to as "fines", exits from the reactor together with product and feed gases. These fines comprise as much as ten weight percent of the particulate silicon fed to the reactor. Therefore, the fines can represent a substantial volume of material whose final disposition needs to be managed in an economical and environmentally sound manner.

Also, during this process, metals, for example, aluminium, which are present as contaminants in the feed materials, may be converted to metal salts such as aluminium trichloride. The sublimation of such metal salts during subsequent separation processes may cause clogging of separation equipment such as, for example, distillation columns, spray driers and condensers.

The gaseous mixture exiting from the fluidized-bed reactor is typically distilled at a temperature at which the desired organochlorosilanes or chlorosilanes are recovered as overheads. In contrast, the silicon fines, higher-boiling silicon compounds and metal salts are recovered as a liquid stream from the bottom of the still.

The present invention provides a method in which the silicon fines and other solids are recovered by spray-drying as a dry powder, which is essentially free of silicon-containing compounds. US-A 5,118,486 teaches a spray drying process for separating particulate silicon from a liquid by-product stream containing silanes at a temperature within the range of from 35°C to 750°C. In its example, the liquid by-product stream is disclosed as being recovered from a chemical vapor deposition (CVD) process for making high purity silicon. Since such CVD processes employ an high purity silane as the deposition gas, the presence of metal salts which can sublime and clog the spray-drying equipment is not a problem addressed by US-A 5,118,486.

In accordance with our invention we have sought to provide a method in which a spray-drying process is used to recover, in the presence of metal salts, silicon fines which are free of silicon-containing compounds. This objective is achieved by washing the particulate silicon with a solvent having a boiling point below the sublimation temperature of the metal salt, thereby removing the higher-boiling, silicon-containing compounds and any residual monosilanes. The solvent is then separated from the particulate silicon by a spray-drying method, e.g., as taught in US-A 5,118,486, at a temperature below the sublimation temperature of the metal salt.

Surprisingly, the particulate silicon recovered by our method is essentially free of silicon-containing compounds, and can, therefore, be more readily fed as a raw material to the reaction system of a process such as the direct process than in the case in the prior art. Alternatively, the silicon may be disposed of more readily than in the prior art by more economical and environmentally more appropriate methods than those currently proposed or in use.

Reference is now made to the accompanying drawing in which:

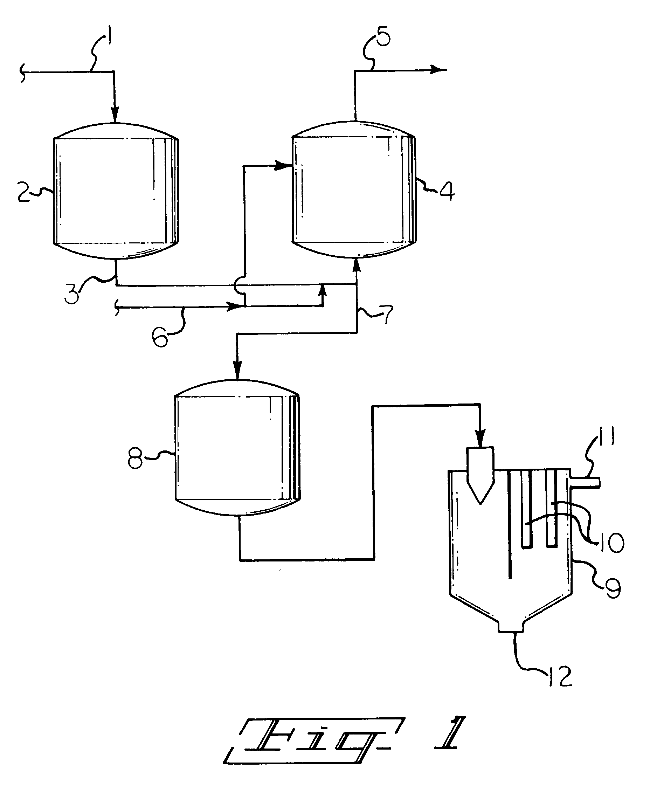

Figure 1 is a schematic representation of an embodiment of the claimed method, and is intended to facilitate an understanding of said method. In Figure 1, a by-product stream comprising particulate silicon, residual monosilanes, an high-boiling silicon-containing compound and a metal salt, where the high-boiling silicon-containing compound has a boiling point higher than the sublimation temperature of the metal salt, is fed through a conduit 1 to a slurry holding tank 2. The liquid by-product stream is fed from the slurry holding tank 2 through a conduit 3 to a filter 4. Particulates present in the liquid by-product stream are retained in the filter 4, while the liquid fraction exits through a port 5, and is recovered. When the pressure drop across the filter 4 reaches a level indicating that the filter is becoming blocked by the retained particulates, feed of the liquid by-product stream to the filter 4 is stopped. A solvent is passed through a conduit 6 to the filter 4, in order to wash the retained particulates, and to remove residual high-boiling silicon-containing compounds and monosilanes retained therein. The solvent containing the high-boiling silicon-containing compounds and monosilanes exits through a conduit 5 and is processed as appropriate. The washed particulates are then dislodged from the filter 4, and removed through a conduit 7 by passing solvent, an inert gas such as nitrogen, or a mixture of both, through the conduit 6. The removed washed particulates pass through the conduit 7 to a slurry holding tank 8. From the slurry holding tank 8, the particulate slurry is fed to a spray dryer 9, in which solvent is evaporated from the particulates, the particulates being collected on filters 10 positioned in the spray dryer 9. A gas comprising the vaporized solvent, atomizing gas, and heating gas is recovered from the spray dryer 9 through a port 11. Particulate material collected on the filters 10 is periodically dislodged from the filters 10 and collected from a port 12.

The present invention relates to a method of recovering particulate silicon from a by-product stream.

This method comprises:
(A) substantially separating a liquid stream comprising particulate silicon, a metal salt and a high-boiling, silicon-containing compound having a boiling point higher than the sublimation temperature of the metal salt, into a liquid component and a particulate component, wherein the particulate component comprises the particulate silicon, the metal salt and a residual, high-boiling, silicon-containing compound;
(B) washing the particulate component with a solvent having a boiling point below the sublimation temperature of the metal salt, thereby essentially separating the residual, high-boiling silicon-containing compound from the particulate silicon; and
(C) recovering the particulate component by spray-drying at a temperature below the sublimation temperature of the metal salt.

In step (A) of our method, a by-product stream is "substantially separated" into a liquid component and a particulate component, which particulate component comprises the particulate silicon, a metal salt and a residual of the high-boiling, silicon-containing compound. By "substantially separating" is meant that a major proportion of the high-boiling, silicon-containing compound is separated from the particulate silicon. The separation of step (A) is effected by standard means for separating particulates from liquids, wherein such means do not require temperatures above the sublimation temperature of the metal salt, and wherein the separated particulates can then be washed to remove or to replace liquids entrained therein. The separation is effected by, for example, filtration, centrifugating or settling. A preferred method is filtration.

The source of the by-product stream is not critical to the present method. However, our method is particularly effective for the recovery of particulate silicon in by-product streams from the direct processes for the production of chlorosilanes and organochlorosilanes. These direct processes include the reaction of hydrogen chloride with particulate silicon to form chlorosilanes, e.g., trichlorosilane and tetrachlorosilane, and the reaction of methyl chloride with particulate silicon to form methylchorosilanes.

A typical process for producing chlorosilanes or organochlorosilanes is conducted as a continuous process in a fluidized-bed reactor. Excess feed gases, reaction product gases, and particulates entrained in exiting gases will exit from the reactor to a distillation train in which monosilanes are then recovered as a low-boiling overhead fraction. Depending upon the feed to the fluidized-bed reactor, the low-boiling monosilane fraction may include, for example, trichlorosilane, tetrachlorosilane, trimethylchlorosilane, dimethyldichlorosilane and/or methyltrichlorosilane. The bottom fraction remaining after distillation is a by-product stream which contains a significant fraction of the low-boiling monosilanes, higher boiling, silicon-containing compounds and particulates carried over from the reactor, e.g., silicon, silicon dioxide, metal oxides and metal salts. The high-boiling, silicon-containing compounds, the nature of which depends upon the feed to the fluidized-bed reactor, may be, for example, polysilanes, polysiloxanes or silylmethylenes. A typical composition for a by-product stream resulting from the reaction of hydrogen chloride with particulate silicon is provided in the example herein. Typical compositions for by-product streams resulting from the reaction of methyl chloride with particulate silicon are described in, for example, US-A 5,326,896 and US-A 5,175,329, both of which exemplify typical by-product streams which may be used in the present method.

The advantage of the claimed method is realized when the by-product stream contains a metal salt which has a sublimation temperature below the boiling point of the high-boiling, silicon-containing compounds. Although the type of metal salt is not critical to the present invention, when the by-product stream is from a direct process for preparing chlorosilanes organo-chlorosilanes, the metal salt which is typically of concern is aluminium trichloride. Aluminium trichloride is principally the result of the chlorination of aluminium metal provided to the process as a contaminant of the particulate silicon.

The presence of a metal salt having a temperature of sublimation below the boiling point of the high-boiling, silicon-containing compound in a by-product stream complicates the spray drying of the particulates in the by-product stream. To separate the high-boiling, silicon-containing compound from the particulate silicon, the spray dryer must be operated at a temperature which is at least that of the boiling point of the high-boiling, silicon-containing compound. Since this temperature is above the sublimation temperature of the metal salt, the metal salt will sublimate, and thereafter deposit on cooler surfaces, causing significant problems with the spray drying apparatus, e.g., the clogging of conduits, filters and the like, or heat transfer problems.

To overcome such problems, the present method provides step (B), which requires washing of the particulate component with a solvent having a boiling point below the sublimation temperature of the metal salt. The solvent wash removes the higher-boiling, silicon-containing compound from the particulate component, thereby providing a particulate component which is essentially free of the high-boiling silicon compound, and also removes any residual monosilanes. The only restriction on the solvent is that it have a boiling point below that of the metal salt. The solvent may be an organic, inorganic or chlorosilane solvent. When the by-product stream results from a direct process for making chlorosilanes, it is preferred that the solvent be selected from trichlorosilane, tetrachlorosilane and mixtures thereof. When the by-product stream results from a direct process for making methylchlorosilanes, it is preferred that the solvent be selected from methyltrichlorosilane, dimethyldichlorosilane, trimethylchlorosilane and mixtures thereof. The wash effluent may be further treated by processes such as distillation to recover useful components of the wash process.

In step (C) of our method, the washed particulate component is spray dried at a temperature below the sublimation temperature of the metal salt to recover a particulate component essentially free of the high-boiling silicon-containing component. The method of recovering the particulate component by spray-drying is not critical provided the temperature is not raised substantially above the sublimation temperature of the metal salt. By a temperature of "substantially above the sublimation temperature" is meant that the temperature is not so high as to cause sublimation of the metal salt at a level unacceptably detrimental to the spray drying process. For example, when the metal salt is aluminium trichloride, a preferred temperature for running the spray dryer is within a range of from 60°C to 80°C.

One example of a useful method for spray drying the washed particulate component is described in US-A 5,118,486.

In a preferred process, the washed particulate component, as a slurry in a solvent, is atomized by being passed through a two-fluid, pressure-type nozzle comprising two concentric channels. A preferred two-fluid atomizing nozzle consists of an inner concentric channel for feeding the washed particulate component into the heated zone of the spray dryer chamber, and an outer concentric channel for feeding a high pressure atomizing gas, which facilitates atomization of the by-product stream. The by-product stream and the high pressure atomizing gas can be mixed either internally, while inside the two-fluid atomizing nozzle, or externally, upon expulsion into the heated zone of the spray dryer. It is preferred that the by-product stream and the high-pressure atomizing gas be mixed externally in the heated zone. The high-pressure atomizing gas fed through the outer concentric channel of the atomizing nozzle may be any inorganic or inert gas as described in US-A 5,118,486. When the by-product stream is from a direct process for making chlorosilanes, a preferred high pressure atomizing gas is tetrachlorosilane.

The atomized stream comprising the washed particulate component and solvent slurry is passed into a heated zone to effect vaporization of the solvent. The heated zone is created by introducing a preheated gas into the area immediately adjacent to the exit of the atomizing nozzle. The preheated gas is any gas which can be preheated to a temperature sufficient to vaporize the solvent from the atomized slurry comprising the washed particulates and solvent. The preheated gas may be, for example, an inorganic gas, an inert gas, monosilanes, hydrogen or a mixture thereof. When the by-product stream is from a direct process for making chlorosilanes, a preferred preheated gas is nitrogen.

The temperature of the preheated gas must be such that the temperature of the heated zone is within a range of at least the boiling point of the solvent and below the temperature of the sublimation point of the metal salt. When the metal salt is aluminium trichloride, the wash solvent is tetrachlorosilane and the preheated gas is nitrogen. The temperature of the heated zone is maintained within a range of 25°C to 120°C. It is preferred that the temperature of the heated zone be within a range of 60°C to 80°C.

The solvent is vaporized to a gas in the heated zone, resulting in a particulate comprising silicon entrained in a gaseous mixture comprising the solvent and process gases. The particulate comprising the silicon is separated from the gaseous mixture by standard means for separating particulates from gases, for example, filtration, agglomeration, electrostatic precipitation or cyclone filtration. In a preferred embodiment, the gaseous mixture transports the particulate component to a filtration area where the particulates are then separated from the gaseous mixture.

Standard filtration methods, for example, as described in US-A 5,118,486, for separating gas-solid mixtures may be used to effect the separation of the particulates from the gaseous mixture. Filtration is conducted using a batch-type filter positioned, for example, in a pressure vessel. It is preferred that the filter elements be composed of a porous sintered metal.

Particulates entrained in the gaseous mixture are collected by the filter elements as the gaseous mixture passes through the filter elements. In a preferred embodiment, the particulates collected by the filter elements are periodically purged from the filter elements by a pulsed gas, and are directed into a collection device for further silicon recovery. In the present method, the filter may either be located in a filtration area incorporated within the spray drying apparatus or be separate from the spray dryer.

A particulate component essentially free of the high-boiling, silicon-containing compound is recovered by the present method. By "essentially free" is meant that a residual amount of the high-boiling, silicon-containing compound that was not removed by the solvent wash may still be associated with the particulate component. However, it is preferred that all detectable high-boiling, silicon-containing compounds be removed from the particulate component during the washing step. Recovered particulate silicon may then be recycled back to the original process from which the by-product stream originated, or may be disposed of by appropriate methods.

A surprising advantage of the present method is that the volume of the by-product stream constituents which must be disposed of is significantly reduced. Moreover, low-boiling monosilanes are recovered as usable product. Further, the high-boiling, silicon-containing compounds, when isolated, are in a smaller volume of material to be handled. The high-boiling silicon compounds may be additionally processed to form usable monosilanes. The recovered particulate silicon is essentially free of chlorosilanes, making handling and disposition of the material easier.

The following example is provided to illustrate the initial separating and washing steps of the present invention. This example is not intended to limit the appended claims.

### Example

The ability to filter and to wash a particulate, silicon-containing by-product stream in order to free the stream of high-boiling, silicon-containing compounds was evaluated.

A by-product stream from a fluidized-bed process reacting hydrogen chloride with particulate silicon was used. Fifteen cycles of the filtering and wash process were run to evaluate the longevity of the filter element. During the course of the 15 cycles, the by-product stream contained an average of 9.4 weight percent solids prior to filtering. Typically, 17 weight percent of the solids was aluminium trichloride, with silicon fines representing 30 to 70 weight percent of the solids, and the remaining solids consisting of silicon dioxide and other metal chlorides or oxides. High-boiling silicon-containing compounds having a boiling point above that of tetrachlorosilane represented approximately 10 weight percent of the by-product stream. Two-thirds of the high-boiling, silicon-containing compound were Cl₆Si₂, with the remaining one-third being disiloxanes. Trichlorisilane and tetrachlorisilane comprised 80 weight percent of the by-product stream.

The filter apparatus consisted in a stainless steel housing containing a single sintered metal filter element. The filter element was a 7.6 cm by 122 cm cylinder having an average pore size of 5 micrometers (Mott Metallurgical Corporation, Farmington, CT). The by-product stream, in the form of a slurry, was fed to the filter at a rate of 2.6 to 3.8 liters per minute (1pm). Pressure drop across the filter was monitored until it reached a gauge pressure of 172.4 kPa (25 psi), and the feed was then stopped. Typically, at this point, the filter contained 10.8 kg/m² of filter cake. The filter cake was washed with 46 liters of tetrachlorosilane (1.2 filter apparatus volumes). Monitoring of the effluent from the filter apparatus indicated that more than 99 weight percent of the effluent was tetrachlorosilane at the end of the wash step. Monitoring of the effluent stream from the filter apparatus during filtering and washing procedures indicated that the effluent contained less than 0.1 weight percent solids. The filter cake was then washed from the filter element using additional tetrachlorosilane. The above filtration, washing and particulate recovery steps were repeated an additional 14 times to test the longevity of the filter element in the process.

## Claims

1. A method of recovering particulate silicon from a liquid by-product stream, the method comprising:
(A) substantially separating a liquid stream comprising particulate silicon, a metal salt and a high-boiling, silicon-containing compound having a boiling point above the sublimation temperature of the metal salt, into a liquid component and a particulate component in which the particulate component comprises the particulate silicon, the metal salt and residual, high-boiling, silicon-containing compound;
(B) washing the particulate component with a solvent having a boiling point below the sublimation temperature of the metal salt, thereby essentially separating the residual, high-boiling, silicon-containing compound from the particulate component, and
(C) recovering the particulate component by spray drying at a temperature below the sublimation temperature of the metal salt.

2. A method according to claim 1, wherein the separation of the liquid stream of step (A) into a liquid component and a particulate component is effected by filtration.

3. A method according to claim 1, wherein the liquid stream of step (A) is a by-product stream resulting from the reaction of hydrogen chloride with particulate silicon, and the solvent is selected from trichlorosilane, tetrachlorosilane and mixtures thereof.

4. A method according to claim 3, wherein the solvent is tetrachlorosilane.

5. A method according to claim 1, wherein the metal salt is aluminium trichloride.

6. A method according to claim 1, wherein the metal salt is aluminium trichloride, and spray drying is effected at a temperature within a range of from 25°C to 120°C.

7. A method according to claim 6, wherein the spray drying is effected at a temperature within a range of from 60°C to 80°C.

## Patentansprüche

1. Verfahren zum Rückgewinnen von teilchenförmigem Silicium aus einem flüssigen Nebenproduktstrom durch:
(A) im wesentlichen Auftrennen eines teilchenförmiges Silicium, ein Metallsalz und eine hoch-siedende, siliciumhaltige Verbindung, deren Siedepunkt über der Sublimationstemperatur des Metallsalzes liegt, enthaltenden flüssigen Stromes in einen flüssigen Bestandteil und einen teilchenförmigen Bestandteil, in dem der teilchenförmige Bestandteil das teilchenförmige Silicium, das Metallsalz und restliche, hoch-siedende, siliciumhaltige Verbindung enthält,
(B) Waschen des teilchenförmigen Bestandteils mit einem Lösemittel, das einen Siedepunkt unterhalb der Sublimationstemperatur des Metallsalzes aufweist, wodurch im wesentlichen die restliche, hoch-siedende, siliciumhaltige Verbindung aus dem teilchenförmigen Bestandteil abgetrennt wird, und
(C) Rückgewinnen des teilchenförmigen Bestandteils durch Sprühtrocknen bei einer Temperatur unterhalb der Sublimationstemperatur des Metallsalzes.

2. Verfahren nach Anspruch 1, dadurch gekennzeichnet daß das Auftrennen des flüssigen Stromes in Schritt (A) in einen flüssigen Bestandteil und einen teilchenförmigen Bestandteil durch Filtration erfolgt.

3. Verfahren nach Anspruch 1, dadurch gekennzeichnet, daß der flüssige Strom von Schritt (A) ein Nebenproduktstrom ist aus der Umsetzung von Chlorwasserstoff mit teilchenförmigem Silicium und das Lösemittel ausgewählt ist aus Trichlorsilan, Tetrachlorsilan und Mischungen derselben.

4. Verfahren nach Anspruch 3, dadurch gekennzeichnet, daß das Lösemittel Tetrachlorsilan ist.

5. Verfahren nach Anspruch 1, dadurch gekennzeichnet, daß das Metallsalz Aluminiumtrichlorid ist.

6. Verfahren nach Anspruch 1, dadurch gekennzeichnet, daß das Metallsalz Aluminiumtrichlorid ist und das Sprühtrocknen bei einer Temperatur im Bereich von 25° C bis 120° C ausgeführt wird.

7. Verfahren nach Anspruch 6, dadurch gekennzeichnet, daß das Sprühtrocknen bei einer Temperatur im Bereich von 60° C bis 80° C ausgeführt wird.

## Revendications

1. Un procédé pour séparer du silicium particulaire d'un courant liquide de sous-produits, le procédé consistant à :
(A) séparer sensiblement un courant liquide comprenant du silicium particulaire, un sel métallique et un composé silicié à haut point d'ébullition ayant un point d'ébullition supérieur à la température de sublimation du sel métallique, en un composant liquide et un composant particulaire, le composant particulaire comprenant le silicium particulaire, le sel métallique et du composé silicié à haut point d'ébullition résiduel ;
(B) laver le composant particulaire avec un solvant ayant un point d'ébullition inférieur à la température de sublimation du sel métallique, pour séparer ainsi essentiellement le composé silicié à haut point d'ébullition résiduel du composant particulaire, et
(C) récupérer le composant particulaire par séchage par atomisation à une température inférieure à la température de sublimation du sel métallique.

2. Un procédé selon la revendication 1, dans lequel la séparation du courant liquide de l'étape (A) en un composant liquide et un composant particulaire est effectuée par filtration.

3. Un procédé selon la revendication 1, dans lequel le courant liquide de l'étape (A) est un courant de sous-produits résultant de la réaction de chlorure d'hydrogène avec du silicium particulaire, et le solvant est choisi parmi le trichlorosilane, le tétrachlorosilane et leurs mélanges.

4. Un procédé selon la revendication 3, dans lequel le solvant est le tétrachlorosilane.

5. Un procédé selon la revendication 1, dans lequel le sel métallique est le trichlorure d'aluminium.

6. Un procédé selon la revendication 1, dans lequel le sel métallique est le trichlorure d'aluminium et le séchage par atomisation est effectué à une température comprise dans un intervalle de 25°C à 120°C.

7. Un procédé selon la revendication 6, dans lequel le séchage par atomisation est effectué à une température comprise dans un intervalle de 60°C à 80°C.
